# FASCICULE DE BREVET EUROPEEN

(11) **EP 1 565 625 B1**
(45) Date de publication et mention de la délivrance du brevet: **20.08.2008**
(21) Numéro de dépôt: 03780255.0
(22) Date de dépôt: 30.10.2003
(51) Int. Cl.: E04B 1/74, F16L 59/07, F16L 59/08, F16L 59/02

(54) **MATERIAU D'ISOLATION THERMIQUE SOUPLE COMPRENANT AU MOINS UNE NAPPE AJOUREE**
WÄRMEDÄMMENDES WEICHES MATERIAL MIT WENIGSTENS EINER DURCHLOCHTEN MATTE
FLEXIBLE THERMAL INSULATION MATERIAL COMPRISING AT LEAST ONE OPEN-WORK LAYER

(30) Priorité: 27.11.2002 FR 0214884
(43) Date de publication de la demande: 24.08.2005
(73) Titulaire: Actis S.A, 75755 Paris Cedex 15 (FR)
(72) Inventeur: THIERRY, Laurent, F-09500 Troye d'Ariege (FR)
(74) Mandataire: Cabinet BARRE LAFORGUE & associés
(86) Numéro de dépôt international: PCT/FR2003/003245
(87) Numéro de publication internationale: WO 2004/051020

(56) Documents cités:
- FR-A- 2 150 611
- FR-A- 2 765 305
- US-A- 4 230 057

## Description

L'invention concerne un matériau d'isolation thermique souple comprenant au moins une nappe souple isolante couverte, d'un côté au moins, par un film souple réfléchissant. L'invention concerne en particulier un matériau d'isolation thermique de faible épaisseur (inférieure à 10 cm), dit isolant mince multicouche, en lés ou autres panneaux souples (pièces souples carrées par exemple) pour l'isolation thermique des bâtiments, comprenant une alternance de films souples réfléchissants et de couches souples intercalaires en matériau isolant.

L'isolant selon l'invention est notamment destiné à l'isolation des toitures et combles aménageables (pose sous chevrons, sur chevrons, sur voliges, etc.), des plafonds et combles perdus (pose sous fermettes, sous ou sur plancher, etc.), des sols (pose sur ou sous plancher), des murs et parois verticales, et, le cas échéant, des planchers chauffants hydrauliques, des planchers rayonnants électriques, des portes de garage, des coffres de volet roulant, etc..

Les échanges thermiques résultent de trois modes de transmission simultanés : la conduction, la convection et le rayonnement. Minimiser conjointement ces trois phénomènes est difficile : intercaler une paroi solide entre deux milieux de températures différentes permet d'éviter tout échange par convection entre les deux milieux mais induit des échanges importants par conduction et par transmission et émission de rayonnements thermiques ; réaliser une lame de gaz entre deux parois solides de températures différentes limite les phénomènes de conduction mais génère des échanges par rayonnement entre les deux parois. La conception d'un matériau d'isolation thermique résulte donc d'un compromis, qui doit également tenir compte de contraintes économiques (qui imposent de concevoir des matériaux peu onéreux) et de contraintes industrielles qui imposent de concevoir des matériaux à la fois souples -en vue de faciliter leur conditionnement, leur transport et leur pose-, légers -afin de limiter les charges correspondantes supportées par la structure du bâtiment-, et peu épais -en vue de limiter la perte de volume ou de surface habitable imputable à l'épaisseur du matériau d'isolation ou, pour un volume ou une surface habitable donné(e), la taille et le coût de la structure du bâtiment-.

Il existe aujourd'hui deux grandes familles de matériaux d'isolation thermique :
- les matériaux d'isolation dits isolants épais, d'épaisseur supérieure à 15 cm et très souvent supérieure à 20 cm, qui comprennent généralement une unique nappe épaisse d'un matériau fibreux minéral tel que la laine de roche ou la laine de verre, ou d'un matériau fibreux végétal tel que la laine de chanvre ou la laine de lin, ou encore d'un matériau fibreux animal tel que la laine de mouton. Ladite nappe est couverte de chaque côté par un film de protection en papier Kraft® ou en polypropylène. Ces isolants présentent une résistance thermique satisfaisante, du fait de leur épaisseur (la résistance thermique de la nappe étant sensiblement proportionnelle à son épaisseur), du caractère fibreux de la nappe, et du choix d'une matière de faible conductivité thermique pour la réalisation desdites fibres. Les échanges par transmission radiative sont par ailleurs minimisés par le choix de films de protection opaques. En revanche, ces films de protection présentent une émissivité non négligeable qui favorise les transferts d'énergie par rayonnement, prépondérants lorsque l'écart de température entre l'extérieur et l'intérieur est important. Ces isolants sont de plus, par définition, particulièrement encombrants et lourds, et par conséquent mal adaptés aux applications de réhabilitation ou de rénovation de bâtiments existants, pour lesquels la perte de volume ou de surface imputable à l'isolant et la surcharge que celui-ci impose à la structure du bâtiment n'ont pas été initialement prises en compte. Dans certains cas, l'emploi de ces isolants est même incompatible avec la structure existante ;
- les matériaux d'isolation thermique dits isolants minces, d'épaisseur inférieure à 10 cm et très souvent inférieure à 5 cm, qui comprennent une pluralité de films souples métallisés et de couches souples intercalaires en matériau isolant. La réflectivité des films est utilisée pour limiter les transferts thermiques par rayonnement. En effet, lorsqu'un rayonnement incident émanant d'un milieu chaud atteint une face réfléchissante d'un film, la grande majorité de son énergie est réfléchie vers le milieu chaud sans pénétrer dans le film, de sorte que la fraction de son énergie absorbée, et donc ré-émise par le film, est faible (la fraction d'énergie directement transmise au milieu plus froid situé de l'autre côté du film étant par ailleurs nulle ou négligeable dans le cas d'un film opaque). Et la superposition de plusieurs films métallisés distants permet de réduire progressivement, et de façon plus efficace, les échanges par rayonnement entre deux milieux. Les échanges par rayonnement et par convection entre deux films successifs sont par ailleurs limités par interposition d'une couche intercalaire isolante entre lesdits films. La couche intercalaire joue le rôle d'un espaceur optique permettant de séparer les deux films réfléchissants, afin d'éviter tout pont thermique par contact (conduction) entre les deux films. Il existe plusieurs types connus de couche intercalaire pour isolant mince multicouche, parmi lesquels :
   - les couches en matériau fibreux, et notamment les nappes en matériau fibreux synthétique telles que les ouates en polyester (ou éventuellement les nappes en un matériau fibreux minéral, végétal ou animal -laine de verre, laine de roche, laine de chanvre, laine de mouton-, éventuellement imprégné de résines synthétiques),
   - les couches en mousse alvéolaire à cellules fermées ou ouvertes, en une matière synthétique telle qu'un polyéthylène ;
   - les films à bulles, qui présentent, selon une direction orthogonale à la couche, une ou plusieurs rangées de poches fermées (dites bulles) en matière synthétique, mesurant 5 à 20 mm de diamètre et contenant de l'air,
   - les grilles tissées ou extrudées, telles que les grilles de mousse synthétique évoquées par FR-2 765 305 dans sa partie introductive, ou encore les filets décrits par US-4 230 057, tricotés, tissés, formés de cordes, fils, filaments ou fibres, ou fabriqués par extrusion ou par perforation ou par perforation et expansion de toiles plastiques ou non-tissées.

Les isolants minces sont particulièrement adaptés aux applications de réhabilitation et de rénovation de bâtiments existants, ainsi qu'à certaines applications spécifiques (telles que l'isolation d'un plancher ou d'une chape recevant un parquet flottant). Mais, quel que soit le type de couche intercalaire employé, leur efficacité thermique est encore jugée insuffisante, considérant qu'elle est souvent inférieure à celle des isolants épais les plus performants.

US-4 230 057 préconise l'utilisation d'un filet à titre de couche intercalaire, qui fournit des résultats intéressants. La taille des mailles du filet est choisie suffisamment faible pour que les films ne se touchent pas, et la plus grande possible pour bénéficier des effets de la réflexivité film à film. Mais des progrès restent à accomplir dans l'efficacité des couches intercalaires en terme d'isolation thermique.

En outre, l'inventeur a constaté que les grilles et filets antérieurs présentent également des inconvénients mécaniques, et notamment une trop faible résistance à la traction et une grande déformabilité dans les directions des diagonales des mailles de la grille (ou du filet). Ces inconvénients s'avèrent gênants tant pour la fabrication des grilles ou filets et du matériau, que pour le conditionnement du matériau et la pose de celui-ci ; ils obligent à manipuler les grilles (ou filets) et le matériau avec beaucoup de précautions pour éviter tout déchirement et toute déformation desdites grilles.

L'invention vise à pallier ces inconvénients en proposant un matériau d'isolation thermique souple ayant des propriétés d'isolation thermique améliorées, ainsi qu'une couche intercalaire ayant une tenue mécanique renforcée.

En particulier, un objectif de l'invention est de fournir un matériau isolant mince, d'épaisseur totale inférieure à 10 cm, et notamment inférieure à 5 cm, aux performances d'isolation thermique accrues et notamment supérieures à celles des isolants épais antérieurs.

L'invention vise également à fournir une couche intercalaire aux propriétés d'isolation améliorées, ayant de surcroît une plus grande résistance au déchirement et une plus faible déformabilité au moins dans certaines directions.

Un autre objectif de l'invention est de proposer un matériau d'isolation thermique, et un procédé de pose correspondant, permettant d'obtenir, sans surépaisseur notable, une isolation thermique améliorée aux jonctions entre lés ou autres panneaux adjacents de matériau. En particulier, l'invention vise à proposer un matériau étanche à l'eau (eau de pluie, eau de ruissellement, neige fondue, neige poudreuse) et un procédé de pose d'un tel matériau qui soit simple et rapide, et qui permette de garantir une parfaite étanchéité à l'eau des jonctions entre lés ou autres panneaux de matériau.

Un autre objectif de l'invention est de proposer un matériau procurant les avantages précités et dont le coût de revient "fourni posé" (ce coût comprenant l'ensemble des coûts liés à la fabrication et à la pose du matériau) reste similaire au coût de revient "fourni posé" moyen des matériaux d'isolation thermique antérieurs connus.

Dans toute la suite, une face d'un corps (d'un film par exemple) du matériau selon l'invention est dite peu émissive dès lors qu'elle présente une émissivité ε_{λ,δ} monochromatique directionnelle inférieure à 0,2 pour des longueurs d'onde λ comprises entre 400 et 800 nm -et de préférence pour des longueurs d'onde comprises entre 300 et 1000 nm, voire pour toutes les longueurs d'onde (corps gris)-, pour des directions δ sensiblement orthogonales à ladite face - et de préférence pour toutes les directions (émissivité isotrope)-, et pour des températures du corps correspondant à des conditions normales d'utilisation du matériau.

En outre, une face d'un corps (d'un film par exemple) du matériau selon l'invention est dite réfléchissante dès lors qu'elle présente une réflectivité ρ_{λ,i} monochromatique directionnelle (hémisphérique ou spéculaire) supérieure à 0,8 pour des longueurs d'onde λ comprises entre 400 et 800 nm -et de préférence pour des longueurs d'onde comprises entre 300 et 1000 nm, voire pour toutes les longueurs d'onde-, pour des directions i de rayonnement incident sensiblement orthogonales à ladite face -et de préférence pour toutes les directions d'incidence-, et pour des conditions (température du corps, luminance du flux incident...) normales d'utilisation du matériau.

Par ailleurs, on entend par "nappe", une couche intercalaire qui se présente sous la forme d'un lé souple ou autre panneau souple (de forme quelconque) d'un seul tenant, réalisé dans un matériau souple isolant ayant une cohésion propre. Une telle nappe est, de surcroît, plus épaisse que chaque film la couvrant. N'entrent pas dans cette définition d'une nappe, les couches intercalaires solides, les couches intercalaires non continues formées de cales de séparation ponctuelles et indépendantes (telles les "morceaux calants" décrits par FR-2 765 305), et les rembourrages de matériau en vrac dépourvus de cohésion propre lorsque le matériau en vrac n'est pas collé sur un film ou maintenu entre deux films. L'invention s'applique essentiellement à un matériau comprenant au moins une telle nappe.

L'invention concerne un matériau d'isolation thermique souple comprenant au moins une nappe souple et au moins un film souple superposés, comportant au moins une nappe souple, dite nappe ajourée,
- couverte d'un côté au moins par un film souple, dit film réfléchissant, présentant une face à la fois réfléchissante et peu émissive, et/ou deux faces peu émissives, et/ou deux faces réfléchissantes,
- et pourvue d'au moins une lumière traversante, dite lumière d'isolation, contenant un volume de gaz venant normalement au contact de chaque portion de film en regard de la lumière d'isolation, chaque lumière d'isolation ayant une section frontale dépourvue d'angle vif.

Avantageusement et selon l'invention, la nappe ajourée comprend au moins une zone, dite zone résistive, de plus grande résistance thermique, dans laquelle sont ménagées des lumières d'isolation définissant une aire totale d'ouverture supérieure à la moitié de l'aire de la zone résistive, l'ensemble desdites zones résistives s'étendant sur plus de la moitié de l'aire de la nappe ajourée.

L'expression "le volume de gaz (contenu dans chacune des lumières d'isolation) venant normalement au contact de chaque portion de film en regard de la lumière d'isolation", signifie que le volume de gaz est au moins au contact, d'un côté de la nappe ajourée, du film réfléchissant sur toute la portion dudit film délimitée par la lumière d'isolation. De l'autre côté de la nappe ajourée, il est au contact d'une portion -délimitée par la lumière d'isolation- soit d'un autre film si la nappe est couverte de part et d'autre par un film, soit d'une paroi à isoler si la nappe forme une face frontale du matériau et est (à l'utilisation) appliquée contre une telle paroi ou étendue en regard et à distance d'une telle paroi. En d'autres termes, dans des conditions normales d'utilisation et de mise en oeuvre du matériau selon l'invention, le volume de gaz contenu dans la lumière d'isolation s'interpose entre les deux films que sépare la nappe ajourée (ou bien entre le film couvrant la nappe et une paroi en regard de laquelle celle-ci est appliquée), de sorte que, les deux films (ou le film et la paroi) n'entrent pas en contact l'un avec l'autre. Tout pont thermique entre les deux films (ou entre le film et la paroi en regard) à travers la lumière d'isolation est ainsi évité.

A noter que, dans des conditions normales d'utilisation et de mise en oeuvre, le matériau est déplié, étendu sensiblement à plat contre une paroi, ou fixé sur un support (tel qu'un treillis de tasseaux) sensiblement parallèlement à une paroi ou autre surface globalement plane (surface définie par la couverture d'une toiture par exemple). A l'inverse, lorsque le matériau est replié ou enroulé sur lui-même, en vue de son transport par exemple, il n'est pas exclu que, du fait de leur souplesse et de la compressibilité de la nappe, deux films en regard se touchent à travers une lumière d'isolation.

L'invention consiste donc à utiliser, à titre de couche intercalaire, une nappe dans laquelle ont été ménagées une ou plusieurs lumières d'isolation dépourvues d'angle vif.

La présence de ces lumières d'isolation entre deux films successifs a deux effets contraires : elle entraîne une diminution des échanges énergétiques par conduction entre les deux films, mais favorise les échanges énergétiques par rayonnement et convection entre ceux-ci. L'utilisation d'un film réfléchissant d'un côté au moins de la nappe permet de compenser partiellement l'augmentation des échanges par rayonnement, et il s'avère a posteriori que ces effets contraires se traduisent finalement par une amélioration des performances d'isolation thermique du matériau (dans des conditions -notamment de température-normales d'utilisation et mise en oeuvre du matériau). Il est à noter que les transferts par rayonnement à travers un film réfléchissant tel que défini précédemment, sont limités quel que soit le côté du film où se situe le milieu chaud, de sorte que le matériau est efficace été comme hiver.

La forme des lumières d'isolation selon l'invention présente plusieurs avantages :
- de façon inexpliquée, ladite forme semble à l'origine d'une amélioration des performances d'isolation de la nappe dans une mesure inattendue. L'inventeur a en effet constaté que la comparaison des performances d'isolation entre une nappe ajourée selon l'invention et une nappe de même nature et de même épaisseur, mais dépourvue de lumières d'isolation, aboutit à un rapport bien supérieur au rapport résultant de la comparaison entre une grille de mousse antérieure et une couche de mousse de même nature et de même épaisseur que la grille (mais dépourvue de mailles). Les performances d'isolation d'une telle nappe ajourée dépassent donc toutes les prévisions possibles,
- la forme des lumières d'isolation confère une plus grande résistance mécanique à la nappe, et notamment une plus grande résistance à la traction dans toutes les directions contenues dans un plan frontal de la nappe. L'inventeur a en effet constaté que les éventuelles déchirures qui apparaissent dans les grilles antérieures connues naissent principalement dans les angles des mailles de la grille, où les contraintes de fendage sont les plus importantes. La forme arrondie (dépourvue d'angle vif) des lumières d'isolation selon l'invention permet de répartir les contraintes subies par la lumière d'isolation sur l'ensemble de son périmètre, d'éviter une concentration de contraintes de fendage en un point de ce périmètre et donc de limiter la formation de déchirures,
- elle diminue également la déformabilité de la nappe ajourée, en répartissant, sur l'ensemble de leur périmètre et dans toutes les directions, les efforts éventuellement subis par les lumières. En définitive, l'amélioration de la tenue mécanique de la nappe (plus grande résistance au déchirement et plus faible déformabilité) facilite la fabrication et les manipulations ultérieures du matériau,
- pour les deux précédentes raisons, la forme arrondie des lumières d'isolation selon l'invention permet de réaliser des lumières dans une nappe fibreuse, notamment par découpage, sans risquer de voir la nappe se déchirer lors du retrait des chutes découpées pour former lesdites lumières. Il est alors possible d'envisager une fabrication industrielle et rentable de telles nappes ajourées fibreuses.

Avantageusement et selon l'invention, la nappe ajourée est en un matériau fibreux non tissé, thermolié et/ou aiguilleté et/ou collé. Une telle nappe ajourée diffère donc des grilles ou filets antérieur(e)s connu(e)s, non seulement par la forme de ses lumières d'isolation, mais aussi par sa nature et sa structure. Une telle nappe présente deux niveaux d'aj ourage : d'une part, l'espace entre les fibres entremêlées, qui forme une multitude de galeries tortueuses de l'ordre du micron (allant éventuellement jusqu'au millimètre), et d'autre part les lumières d'isolation au travers desquelles les films réfléchissants (ou le film et la paroi) sont directement en regard. Les résultats thermiques d'une telle nappe ajourée fibreuse sont particulièrement satisfaisants.

En variante, la nappe ajourée est en mousse synthétique.

La nappe ajourée présente préférentiellement une multitude de lumières d'isolation. Chacune de ces lumières d'isolation est ménagée de façon à éviter la formation d'un pont thermique à travers la lumière d'isolation. En particulier, les dimensions de chaque lumière d'isolation, l'épaisseur de la nappe ajourée et la souplesse de chaque film qui la couvre, sont adaptées pour éviter tout contact intempestif (dans des conditions normales d'utilisation et mise en oeuvre du matériau), à travers ladite lumière d'isolation, entre le film réfléchissant et un film ou une paroi en regard de l'autre côté de la nappe ajourée. A noter que la nappe ajourée est de préférence couverte de chaque côté par un film souple réfléchissant.

Les lumières d'isolation sont réalisées par emboutissage de la nappe, ou par découpage de la nappe au moyen d'outils de coupe mécaniques (par exemple, cylindre rotatif à lames de coupe, et contre-cylindre associé), thermiques, optiques (laser), hydrauliques (jet d'eau haute pression), vibratoires à haute fréquence (ultrasons)...

Avantageusement et selon l'invention, chaque lumière d'isolation présente une dimension maximale inférieure à dix fois l'épaisseur de la nappe ajourée. On entend par "dimension d'une lumière" une dimension de la lumière dans un plan frontal de la nappe. La dimension maximale de la lumière est sa plus grande dimension dans un tel plan frontal.

En particulier, la nappe ajourée présente avantageusement une épaisseur (au repos) comprise entre 1 et 12 mm -de préférence de l'ordre de 8 mm-, et chaque lumière d'isolation présente une dimension maximale comprise entre 10 et 30 mm -de préférence de l'ordre de 20 mm-.

Avantageusement et selon l'invention, la nappe ajourée présente des lumières d'isolation de section circulaire. Cette forme des lumières d'isolation donne : les meilleurs résultats en terme de résistance mécanique et de déformabilité de la nappe ajourée, ainsi qu'en terme d'isolation thermique.

En variante ou en combinaison, la nappe ajourée présente des lumières d'isolation de section ovale ou elliptique. Cette forme fournit également des résultats satisfaisants. A noter qu'une même nappe ajourée peut comprendre différentes formes de lumières d'isolation.

Avantageusement et selon l'invention, les lumières d'isolation d'une zone résistive de la nappe ajourée sont alignées dans deux directions orthogonales, et notamment dans une direction longitudinale et dans une direction transversale du matériau. Si le matériau se présente sous la forme d'un lé, les directions longitudinale et transversale du matériau correspondent respectivement aux directions de la longueur du lé et de sa largeur (laize). S'il s'agit d'un panneau carré, les directions longitudinale et transversale du matériau correspondent respectivement aux directions de deux côtés adjacents du panneau.

En variante, les lumières d'isolation d'une zone résistive sont disposées en quinconce. Elles sont par exemple alignées dans une direction longitudinale du matériau et décalées dans une direction transversale de celui-ci, ou, à l'inverse, alignées dans la direction transversale et décalées dans la direction longitudinale.

Ces deux répartitions, non seulement confèrent une bonne tenue mécanique à la nappe ajourée, mais aussi optimisent, de façon inexpliquée, ses résultats en terme d'isolation thermique. A noter qu'une même nappe peut présenter des zones résistives ayant des répartitions différentes.

Avantageusement et selon l'invention, la ou les zone(s) résistive(s) forme(nt) une(des) bande(s) dans la nappe ajourée, et notamment une(des) bande(s) longitudinale(s), s'étendant principalement longitudinalement, de préférence sur toute la longueur du matériau, ou bien une(des) bande(s) transversale(s), s'étendant principalement transversalement, éventuellement sur toute la largeur du matériau, ou encore des zones rectangulaires séparées à la fois par des bandes pleines longitudinales et par des bandes pleines transversales (une bande pleine étant dépourvue de lumière d'isolation).

Dans une version préférée de l'invention, le matériau comprend une pluralité de nappes et chacune des nappes du matériau est ajourée selon l'invention. Un matériau comprenant au moins une nappe ajourée, ainsi qu'une ou plusieurs autres couches intercalaires non ajourées telles que des couches antérieures connues, est également conforme à l'invention. Si le matériau comprend une pluralité de nappes ajourées selon l'invention, celles-ci peuvent être toutes identiques ou, à l'inverse, présenter des caractéristiques différentes (nature et épaisseur de la nappe, forme, taille et répartition des lumières d'isolation...).

Le matériau selon l'invention présente de préférence une épaisseur totale inférieure à 10 cm, et notamment inférieure à 5 cm (il compte avantageusement 4 à 6 nappes, de préférence ajourées).

Avantageusement et selon l'invention, chaque nappe ajourée est une ouate ou un feutre ou un molleton en un matériau fibreux non tissé (thermolié et/ou aiguilleté et/ou collé) réalisé à partir d'une matière choisie parmi les matières synthétiques en polyester, polyamide, chlorofibres, polyoléfine (polyéthylène, polypropylène...), les matières artificielles telles que rayonne viscose, les matières naturelles végétales telles que coton, chanvre, lin, les matières naturelles animales telles que laine de mouton, les mélanges de plusieurs des matières précédemment citées. Les fibres utilisées peuvent être pleines ou creuses (de préférence creuses). Elles sont avantageusement élastiques.

Le matériau d'isolation thermique selon l'invention comprend préférentiellement au moins deux nappes (et notamment deux nappes ajourées) séparées par un film souple réfléchissant, dit film intermédiaire. Avantageusement et selon l'invention, chaque film intermédiaire est en une matière synthétique choisie parmi les polyoléfines tels que polyéthylènes et polypropylènes, les polyesters tels que polycarbonates, les polyéthers, les polyuréthanes, les polystyrènes, les polychlorures de vinyle, les mélanges de plusieurs des matières précédemment citées. Chaque film intermédiaire présente avantageusement au moins une face recouverte d'un revêtement métallique réfléchissant tel que l'aluminium, par dépôt sous vide ou par doublage ou par enduction. Une telle face est peu émissive et réfléchissante, compte tenu du matériau constitutif du film et de son revêtement métallique.

Le matériau d'isolation thermique selon l'invention comprend préférentiellement un film extérieur, dit film de couverture, présentant une face externe formant une face frontale du matériau, de préférence destinée à être orientée vers l'extérieur du bâtiment ou de la pièce à isoler. Avantageusement et selon l'invention, ledit film de couverture est étanche à l'eau et perméable à la vapeur d'eau, et présente une résistance à la rupture supérieure à 150 N. Il s'agit préférentiellement d'un non-tissé, réalisé dans une matière choisie parmi les polypropylènes, les polyesters, la rayonne viscose, les mélanges de plusieurs des matières précitées. Sa face externe est avantageusement gaufrée et/ou calandrée et/ou apprêtée en vue d'améliorer la tenue mécanique et de renforcer la résistance du film. Elle est de plus préférentiellement recouverte d'un revêtement métallique réfléchissant tel que l'aluminium, par dépôt sous vide ou doublage ou enduction, de façon à présenter une réflectivité élevée (de préférence quels que soient le rayonnement incident, sa longueur d'onde, son angle d'incidence, le matériau constitutif du film, ...).

Un tel film de couverture constitue un film étanche et résistant, susceptible de protéger le matériau et l'intérieur d'un bâtiment contre la poussière, la pluie, la neige poudreuse, etc.. Il remplit donc les fonctions des films connus sous le nom d'écran de sous-toiture pare-pluie. On connaît des écrans de sous-toiture formés d'une armature en nappe, enduite sur ses deux faces d'un bitume saupoudré de talc anti-adhérent, et éventuellement métallisée sur une face. On connaît également les écrans de sous-toiture formés d'un film métallisé réfléchissant en polyoléfine, doté d'une grille de renfort mécanique et enduit de polymères ignifuges. Les écrans de sous-toiture connus sont destinés à la protection de combles ventilés, ou de combles fermés s'ils sont microperforés (pour être perméables à la vapeur d'eau).

Dans une version préférée de l'invention, le matériau intègre donc un nouvel écran de sous-toiture pare-pluie et un nouvel isolant multicouche, dont la combinaison offre de nouveaux avantages. Elle confère en effet une plus grande résistance mécanique à la fois à l'écran de sous-toiture et à l'isolant, facilite la pose de l'isolant (dont la tenue mécanique est améliorée par la présence de l'écran), réduit considérablement le temps de pose et les coûts correspondants puisqu'un seul produit offrant à la fois étanchéité et isolation est posé, au lieu de deux antérieurement...

Le matériau d'isolation thermique selon l'invention comprend de plus préférentiellement un film extérieur, dit film de finition, présentant une face externe formant une face frontale du matériau (face frontale opposée à celle formée par le film de couverture) de préférence destinée à être orientée vers l'intérieur du bâtiment ou de la pièce à isoler. Avantageusement et selon l'invention, ledit film de finition est similaire ou identique au film de couverture. Il s'agit en particulier d'un non-tissé présentant une résistance à la rupture supérieure à 150 N, éventuellement étanche à l'eau et perméable à la vapeur d'eau, réalisé dans une matière choisie parmi les polyesters, la rayonne viscose, les polyoléfines et notamment les polypropylènes, les mélanges de plusieurs des matières précitées. Sa face externe est de préférence recouverte d'un revêtement métallique réfléchissant. Elle est avantageusement gaufrée et/ou calandrée et/ou apprêtée pour conférer au film une meilleure résistance à la rupture. En variante, le film de finition intègre une grille de renfort mécanique souple, telle qu'une grille en fibres de verre, en fibres de polyester, en fibres de polyamide, etc., et présente une face externe enduite d'un matériau de renfort mécanique choisi parmi les polypropylènes. A noter qu'un tel film peut également être utilisé à titre de film de couverture.

Avantageusement et selon l'invention, toutes les couches (film(s) et couche(s) intercalaire(s)) du matériau sont fixées entre elles par soudure ou collage en un nombre restreint de points, dit points de liaison, isolés et répartis sur l'aire du matériau. Il est à noter que, dans les isolants antérieurs, les diverses couches de l'isolant sont généralement associées par des coutures continues, réalisant des ponts thermiques sur d'importantes longueurs, ou collées les unes aux autres sur toute leur surface, de sorte qu'apparaissent d'importants échanges thermiques par conduction entre deux couches adjacentes. Les diverses couches du matériau selon l'invention sont, au contraire, associées ponctuellement en vue de limiter la surface totale sur laquelle elles sont en contact conductif, ainsi que le nombre de ponts thermiques éventuellement générés par ces contacts.

Avantageusement et selon l'invention, les points de liaison sont situés en dehors des lumières d'isolation, et notamment en dehors des zones résistives de chaque nappe ajourée (pour que, en ces points de liaison, les films restent séparés par le matériau isolant constitutif des nappes).

Le matériau d'isolation selon l'invention se présente sous la forme de panneaux (souples) tels que des lés ou des pièces sensiblement carrées, dites dalles. Dans toute la suite, un panneau de matériau désigne un morceau de matériau présentant, lorsqu'il est posé sur une surface sensiblement plane, une plus faible dimension orthogonale à cette surface correspondant à une épaisseur totale du matériau, et des dimensions plus importantes dans un plan parallèle à cette surface, qui délimitent deux faces frontales opposées du panneau ayant une forme quelconque. Le contour périphérique d'un panneau ou d'une couche du panneau (telle qu'un film, une nappe ou encore une série de films et de nappes) correspond au contour périphérique d'une section dudit panneau ou de ladite couche par un plan parallèle à cette surface, dit plan frontal du panneau ou de la couche.

Toutes les couches d'un panneau, à l'exception du film de couverture, présentent des dimensions sensiblement identiques dans des plans frontaux, et forment une épaissseur multicomposant dite épaisseur isolante. Avantageusement et selon l'invention, le matériau présente par ailleurs un film de couverture qui s'étend en saillie de cette épaisseur isolante le long d'au moins une portion nominale du contour périphérique de ladite épaisseur isolante, de façon à former au moins une bande de recouvrement d'un panneau adjacent.

L'invention s'étend à un procédé de pose de panneaux de matériau selon l'invention en regard d'une surface à isoler, caractérisé en ce que l'on pose les panneaux de matériau, que l'on fixe à un support, en regard de ladite surface, de telle sorte que chaque panneau forme, avec chaque panneau qui lui est adjacent, une jonction recouverte d'une bande de recouvrement et le long de laquelle les épaisseurs isolantes desdits panneaux (adjacents) sont juxtaposées bord à bord pour former une étendue isolante sensiblement continue.

Chaque bande de recouvrement d'un panneau vient ainsi recouvrir une portion (qui est, par définition, de même largeur que la bande) du film de couverture et de l'épaisseur isolante d'un panneau adjacent. Avantageusement et selon l'invention, on colle chaque bande de recouvrement de chaque panneau au film de couverture du panneau adjacent qu'elle recouvre partiellement. Cette opération peut être réalisée au moyen d'un film adhésif, tel qu'un ruban adhésif en rouleau, que l'on colle à cheval sur la bande de recouvrement et sur le film de couverture du panneau adjacent. En variante, la face interne de la bande de recouvrement, destinée à être appliquée sur le film de couverture du panneau adjacent, est pourvue d'un revêtement adhésif, protégé, jusqu'à la pose des panneaux, par une feuille amovible. En variante, on utilise un ruban adhésif double face, que l'on colle, d'une part sur la face interne de la bande de recouvrement, et d'autre part sur le film de couverture du panneau adjacent.

La présence de bandes de recouvrement, ménagées dans le film de couverture des panneaux de matériau selon l'invention, permet de conserver des performances d'isolation thermique satisfaisantes aux jonctions des panneaux, sans qu'il ne soit nécessaire de prévoir, auxdites jonctions, une superposition des panneaux (qui crée une surépaisseur indésirable). Si le film de couverture réalise un écran de sous-toiture étanche aux eaux de ruissellement et à la neige poudreuse, la jonction sera également étanche aux eaux de ruissellement et à la neige poudreuse, et le matériau préservé.

A noter que l'expression « poser les panneaux en regard d'une surface à isoler » employée ci-avant signifie, soit que l'on applique lesdits panneaux contre ladite surface, auquel cas le « support » auquel sont fixés les panneaux fait référence à la surface elle-même, soit que l'on étend les panneaux à distance de la surface, sensiblement parallèlement à celle-ci, auquel cas le « support » comprend par exemple des chevrons et/ou des liteaux (la surface étant celle définie par la couverture d'une toiture par exemple...) et/ou des tasseaux et/ou des taquets ou autres entretoises en plastique (pour une surface telle qu'un plafond, un mur...), etc..

Par ailleurs, l'expression "portion nominale" ci-dessus employée fait référence à une portion du contour périphérique de l'épaisseur isolante du panneau adaptée pour que, une fois les panneaux de matériau posés selon l'invention, toutes les jonctions entre panneaux soient normalement (sauf éventuelles exceptions dues à la géométrie de la surface à isoler) recouvertes par des bandes de recouvrement.

Dans une première version de l'invention, les panneaux sont en forme de lés (c'est-à-dire de bandes de grande longueur) et le film de couverture s'étend en saillie de l'épaisseur isolante le long d'un bord droit latéral longitudinal de ladite épaisseur isolante, dit bord de recouvrement, de façon à former une bande de recouvrement droite latérale longitudinale. Le bord droit latéral longitudinal de l'épaisseur isolante, opposé au bord de recouvrement, est dit bord simple. En d'autres termes, la portion nominale, telle que définie précédemment, de contour périphérique d'un lé de matériau correspond à un bord latéral longitudinal du lé.

Dans une deuxième version de l'invention, les panneaux sont en forme de dalles et le film de couverture s'étend en saillie de l'épaisseur isolante le long de deux bords droits latéraux, dits bords de recouvrement, contigus ou opposés de ladite épaisseur isolante, de façon à former deux bandes de recouvrement droites latérales contiguës ou opposées. Les deux autres bords droits latéraux de l'épaisseur isolante sont dits bords simples. En d'autres termes, la portion nominale, telle que définie précédemment, de contour périphérique d'une dalle de matériau correspond à deux bords latéraux de la dalle.

Pour poser un lé ou une dalle, dit(e) deuxième panneau, adjacent(e) à un lé ou une dalle, dit(e) premier panneau, déjà posé(e) et fixé(e) au support et présentant un bord simple libre, on juxtapose un bord de recouvrement du deuxième panneau au bord simple libre du premier panneau, de sorte que la bande de recouvrement dudit bord de recouvrement du deuxième panneau vient recouvrir une portion de film de couverture et d'épaisseur isolante du premier panneau à partir dudit bord simple. On fixe alors le deuxième panneau au support.

Pour poser un lé ou une dalle, dit(e) deuxième panneau, adjacent(e) à un lé ou une dalle, dit(e) premier panneau, déjà posé(e) et fixé(e) au support et présentant un bord de recouvrement libre, on insère un bord simple du deuxième panneau sous la bande de recouvrement du bord de recouvrement libre du premier panneau de façon à juxtaposer ledit bord simple du deuxième panneau audit bord de recouvrement du premier panneau, de sorte que ladite bande de recouvrement du premier panneau vient recouvrir une portion de film de couverture et d'épaisseur isolante du deuxième panneau à partir dudit bord simple. On fixe alors le deuxième panneau au support.

L'invention concerne également un matériau d'isolation caractérisé en combinaison par tout ou partie des caractéristiques mentionnées ci-dessus et ci-après.

D'autres buts, caractéristiques et avantages de l'invention apparaîtront à la lecture de la description suivante qui se réfère aux figures annexées représentant des modes de réalisation préférentiels de l'invention donnés uniquement à titre d'exemples non limitatifs, et dans lesquelles :
- la figure 1 est une vue en perspective d'un lé de matériau selon l'invention, dont une bande longitudinale médiane a été coupée et dont des portions ont été "arrachées" en vue de dévoiler certaines couches (nappe ou film) du matériau,
- la figure 2 est une vue de dessus schématique d'une portion d'une nappe ajourée selon l'invention.

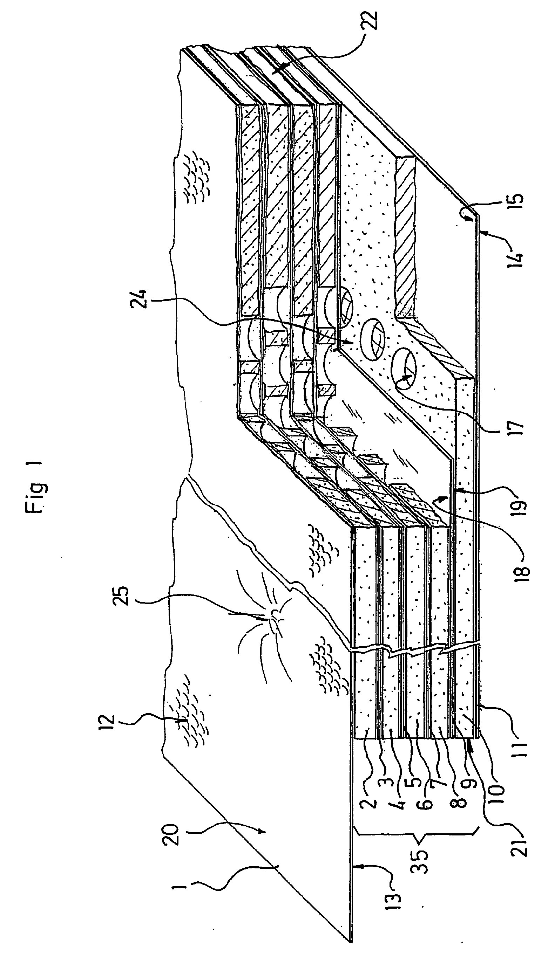

Le matériau souple selon l'invention représenté à la figure 1 se présente sous forme d'un lé de 1500 mm de largeur et d'une ou plusieurs dizaine(s) de mètres de longueur. Dans toute la suite, le terme "longueur" désigne une dimension d'un élément selon une direction longitudinale du lé, et le terme "largeur" désigne une dimension de l'élément selon une direction, dite direction transversale, orthogonale à cette direction longitudinale et contenu dans un plan frontal du lé. Le lé est agencé enroulé ou plié en accordéon lorsqu'il est transporté, et déployé tel qu'illustré à la figure 1 lorsqu'il est posé aux fins d'isolation.

Le matériau comprend une succession de films et de nappes ajourées, à savoir : un film de couverture 1 réfléchissant, une nappe ajourée 2, un film intermédiaire réfléchissant 3, une nappe ajourée 4, un film intermédiaire réfléchissant 5, une nappe ajourée 6, un film intermédiaire réfléchissant 7, une nappe ajourée 8, un film intermédiaire réfléchissant 9, une nappe ajourée 10, un film de finition 11 réfléchissant. La face externe 12 du film de couverture 1 constitue une face frontale du matériau de préférence destinée à être orientée vers l'extérieur du bâtiment à isoler, la face externe 14 du film de finition 11 constituant la face frontale opposée du matériau, de préférence destinée à être orientée vers l'intérieur du bâtiment.

Chaque film intermédiaire 9, 7 ... est en polyéther (et notamment en polyester), et présente une épaisseur de l'ordre du centième ou du dixième de millimètre. Ses faces 18, 19 sont métallisées, par dépôt d'aluminium sous vide par exemple, et possèdent donc une réflectivité élevée. A noter qu'il suffit qu'une seule face 18 ou 19 soit métallisée pour obtenir l'effet isolant souhaité, et ce, été comme hiver (c'est-à-dire quel que soit le côté où se situe le milieu chaud).

Le film de couverture 1 et le film de finition 11 sont des non-tissés en polypropylène ou en polyéther, de masse surfacique de l'ordre de 90 g/m². La face externe 12, 14 desdits films est gaufrée sur toute sa surface (le gaufrage n'étant représenté que par endroit) et métallisée par dépôt d'aluminium sous vide. La face interne 13, 15 de chacun de ces films ne présente de préférence aucun revêtement (en dehors de la portion de face interne du film de couverture 1 correspondant à la bande recouvrement 20, qui peut être recouverte d'un revêtement adhésif) ; son émissivité varie selon le polymère choisi pour réaliser le film mais reste très faible. De tels films de couverture et de finition sont étanches aux eaux de ruissellement et à la neige poudreuse, et perméables à la vapeur d'eau. Ils réalisent tous deux des écrans de sous-toiture pare-pluie, particulièrement résistants au déchirement et au poinçonnement.

La largeur du film de couverture 1 est supérieure à celle de l'épaisseur isolante 35 formée par les autres couches du lé (nappes, films intermédiaires et film de finition), et mesure préférentiellement 1600 mm. Le film de couverture 1 forme donc une bande de recouvrement 20 de 100 mm de largeur, le long et en saillie d'un bord latéral longitudinal 21 de ladite épaisseur isolante 35.

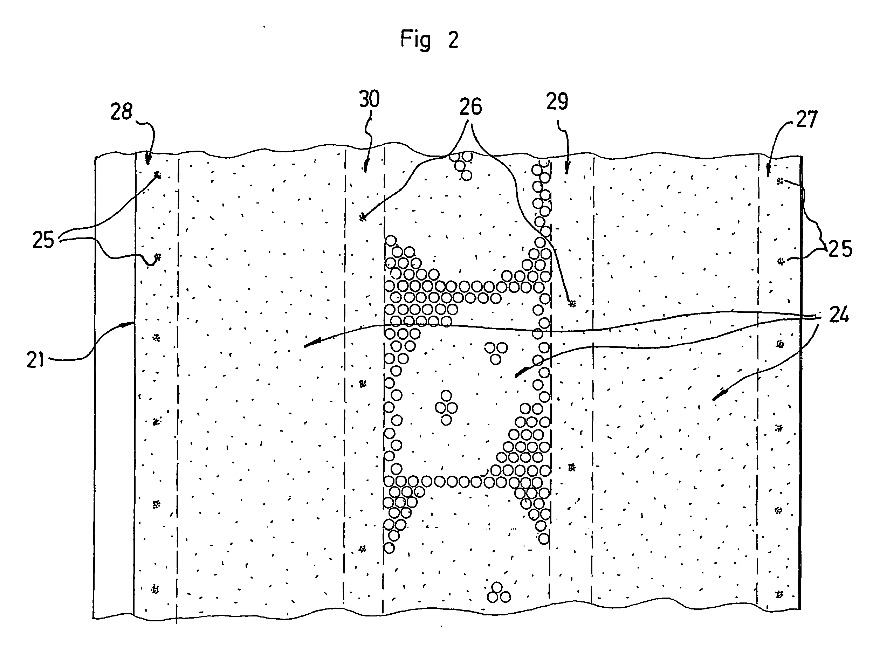

Chaque nappe 2, 4, 6, 8, 10 est percée de lumières d'isolation 17 régulièrement réparties sur trois zones résistives 24 (illustrées à la figure 2) en forme de bandes longitudinales continues, entre lesquelles s'étendent des bandes longitudinales pleines (c'est-à-dire exemptes de lumière d'isolation), également continues, destinées à recevoir les points de liaison du matériau multicouche. De telles zones résistives en forme de bandes continues peuvent aisément être réalisées sur une nappe en lé défilant selon sa direction longitudinale, au moyen d'outils de coupe simples à fonctionnement continu (par exemple, cylindre rotatif muni de lames de coupe, et contre-cylindre).

A noter que, sur la figure 2, seules quelques lumières d'isolation d'une zone résistive (centrale) sont représentées. On comprendra aisément que ladite zone est entièrement percée de lumières d'isolation, et que tel est également le cas des deux autres zones résistives 24 délimitées chacune par un trait en pointillés.

Chaque zone résistive 24 s'étend sur une largeur de 400 mm et sur toute la longueur du lé de matériau. La distance (selon la direction transversale) entre chacun des bords 21, 22 et la zone résistive 24 la plus proche est de l'ordre de 100 mm. La distance séparant deux zones résistives selon la direction transversale est également de l'ordre de 100 mm.

En l'exemple illustré, chaque lumière d'isolation est circulaire et présente un diamètre de l'ordre de 20 mm. La distance selon la direction transversale entre deux lumières d'isolation successives est de l'ordre de 10 mm. Les rangées transversales de lumières d'isolation sont réalisées en quinconce : les lumières de deux rangées transversales successives ne sont pas en regard selon la direction longitudinale.

Chaque nappe ajourée possède une épaisseur, au repos (c'est-à-dire sans aucune pression exercée de part et d'autre de la nappe), de l'ordre de 8 mm. A noter que, sur la figure 1, la proportion entre le diamètre des lumières d'isolation et l'épaisseur de la nappe n'est pas respectée. Les nappes sont de préférence des ouates textiles en polyester, de masse surfacique comprise entre 80 et 120 g/m².

Les différents films et nappes sont fixés entre eux par soudure à ultrasons en quelques points de liaison 25, 26 répartis sur l'aire du lé en dehors des zones résistives 24. Les points de liaison 25, situés dans les deux bandes longitudinales pleines latérales 27, 28 sont dits points de liaison latéraux ; les points de liaison 26, situés dans les deux bandes longitudinales pleines centrales 29, 30 sont dits points de liaison centraux. Les points de liaison 25 latéraux sont réalisés au milieu des bandes pleines latérales 27, 28, c'est-à-dire à 50 mm des bords 21, 22. De façon similaire, les points de liaison 26 centraux sont réalisés au milieu des bandes pleines centrales 29, 30, c'est-à-dire à 50 mm de chacune des zones résistives 24 voisines. La distance séparant deux points de liaison latéraux 25, selon la direction longitudinale, est de l'ordre de 200 mm. La distance séparant deux points de liaison centraux 26, selon la direction longitudinale, est de l'ordre de 400 mm. Les deux rangées de points de liaison latéraux 25 sont réalisées de sorte que lesdits points latéraux 25 soient alignés selon la direction transversale. Les deux rangées de points de liaison centraux 26 sont réalisées de sorte que lesdits points centraux 26 soient en quinconce (c'est-à-dire non alignés) selon la direction transversale, et de sorte qu'ils soient également en quinconce -selon la direction transversale- avec les points de liaison latéraux 25.

En chaque point de liaison, l'épaisseur du matériau est de l'ordre de quelques millimètres du fait de la compression des nappes par la soudure. A distance des points de liaison, l'épaisseur du matériau varie, au repos (c'est-à-dire lorsque le matériau est posé non tendu sur une surface plane et ne subit aucune force de pression), entre 40 et 60 mm. Ces valeurs sont supérieures à la somme des épaisseurs de toutes les couches constitutives (films et nappes) du matériau. En effet, n'étant pas collées entre elles, deux couches successives ne se touchent qu'en des zones de faible dimension autour des points de liaison. A distance desdits points de liaison, lorsque le matériau est au repos, les deux couches successives sont séparées par une lame d'air plus ou moins épaisse contribuant aux performances d'isolation thermique du matériau. Lors de la pose du matériau, il convient de ne pas tendre le matériau de façon forcée, afin de le fixer dans un état le plus proche possible de son état de repos, et de préserver ainsi des lames d'air entre les différentes couches du matériau. A noter qu'à l'état tendu (c'est-à-dire lorsque des forces de tension sont exercées de part et d'autre du lé selon les directions transversale et/ou longitudinale), le matériau présente une épaisseur pouvant varier de 20 à 40 mm, et des propriétés d'isolation thermique qui restent tout à fait satisfaisantes et s'avèrent meilleures que celles des matériaux antérieurs.

La face externe 12 du film de couverture 1 est de préférence orientée vers l'extérieur du bâtiment dans toutes les applications pour lesquelles le matériau est susceptible de subir des ruissellements accidentels d'eau de pluie ou de neige fondue. Ainsi, les bandes de recouvrement 20 empêchent les eaux de ruissellement de s'infiltrer dans les jonctions entre lés, et protègent non seulement l'intérieur du bâtiment mais aussi l'épaisseur isolante 35 du matériau.

En tout état de cause, les lés de matériau selon l'invention sont normalement posés de sorte que la face externe du film de couverture soit orientée vers la personne en train de poser le matériau, afin de faciliter l'opération de collage de chaque bande de recouvrement au film de couverture du lé adjacent. Lorsque les lés sont posés sur chevrons ou sur voliges, le film de couverture 1 est donc avantageusement orienté vers l'extérieur du bâtiment. A noter que, pour l'isolation d'une toiture ou d'une paroi verticale, les lés peuvent être agencés verticalement ou horizontalement.

Le premier lé est posé de façon usuelle et régulièrement agrafé au support (voliges, chevrons, fermettes, tasseaux, plancher...). Le cas échéant, les extrémités longitudinales du lé sont découpées à l'aide d'un cutter usuel. Le lé suivant, dit deuxième lé, est posé de sorte que son bord de recouvrement 21 vienne au contact du bord simple (tel que 22) du premier lé, et que sa bande de recouvrement 20 recouvre le film de couverture (tel que 1) du premier lé. En variante, le deuxième lé est posé de sorte que son bord simple 22 vienne au contact du bord de recouvrement (tel que 21) du premier lé, et que la bande de recouvrement (telle que 20) du premier lé recouvre son film de couverture 1. Le deuxième lé est ensuite régulièrement agrafé au support contre lequel il est appliqué. La bande de recouvrement 20 du deuxième lé (ou en variante du premier lé) est ensuite collée sur le premier lé (respectivement le deuxième lé). A cette fin, la face interne 13 du film de couverture 1 est enduite d'un revêtement adhésif au niveau de la bande de recouvrement 20 (et uniquement dans cette zone), protégé d'une feuille amovible. Une fois le deuxième lé agrafé, la feuille est retirée et la bande de recouvrement du deuxième lé (ou du premier) est plaquée contre la face frontale du premier lé (respectivement, du deuxième lé). A noter que, compte tenu de la souplesse du film de couverture 1, la bande de recouvrement 20 d'un lé est aisément rabattue en vue d'ajuster la position relative du bord de recouvrement correspondant et du bord simple du lé adjacent, ou de décoller la feuille protégeant le revêtement adhésif de ladite bande.

Il va de soi que l'invention peut faire l'objet de nombreuses variantes par rapport aux modes de réalisation précédemment décrits et représentés sur les figures. En particulier, le nombre de nappes et de films du matériau n'est pas limité à celui du mode de réalisation illustré. L'invention s'étend notamment au cas particulier d'un matériau constitué d'une unique nappe ajourée couverte de chaque côté par un film réfléchissant, voire couverte d'un côté seulement par un tel film. Il est à noter cependant que la superposition de plusieurs films réfléchissants permet de diminuer de façon plus efficace les échanges par rayonnement entre deux milieux.

L'invention s'étend également au cas d'un matériau comprenant une ou plusieurs couches intercalaires quelconques (films à bulles, nappes en mousse ou en matériau fibreux...), dès lors que l'une au moins de ces couches intercalaires est une nappe ajourée telle que définie précédemment.

Par ailleurs, l'invention n'est pas limitée à un matériau mince (d'épaisseur inférieure à 10 cm). Elle peut être appliquée à un matériau plus épais, bien que les matériaux minces soient préférés pour leur faible encombrement.

D'autre part, les matières citées dans la description pour la réalisation des films et nappes sont fournies à titre d'exemples non limitatifs.

La forme, le nombre et la disposition des zones résistives et des lumières d'isolation d'une nappe ajourée ne sont pas limités à ceux du mode de réalisation illustré à la figure 2. Toutefois, selon l'invention, les lumières d'isolation sont dépourvues d'angle vif, ce qui exclut les polygones. Les dimensions de chaque lumière d'isolation sont de plus adaptées pour que les films en regard ne se touchent pas à travers la lumière, dans des conditions normales d'utilisation et de mise en oeuvre du matériau.

En particulier, les lumières d'isolation peuvent présenter une section elliptique, oblongue ou de forme plus complexe. Le périmètre de la lumière peut éventuellement présenter une ou plusieurs portions rectilignes, qui ne peuvent toutefois être consécutives (ces portions sont séparées par des portions courbes, de façon à ne former aucun angle vif).

Par ailleurs, les rangées transversales successives de lumières d'isolation peuvent être alignées selon la direction longitudinale, en vue d'en simplifier la réalisation. Des bandes transversales de nappe pleine peuvent en outre être prévues entre des zones résistives successives selon la direction longitudinale.

## Revendications

1. Matériau d'isolation thermique souple comprenant au moins une nappe souple (10) et au moins un film souple (9) superposés, **caractérisé en ce que** comportant au moins une nappe souple (10), dite nappe ajourée,
• couverte d'un côté au moins par un film souple (9), dit film réfléchissant, présentant une face à la fois réfléchissante et peu émissive, et/ou deux faces peu émissives, et/ou deux faces réfléchissantes,
• et pourvue d'au moins une lumière traversante (17), dite lumière d'isolation, contenant un volume de gaz venant normalement au contact de chaque portion de film en regard de la lumière d'isolation, **caractérisé en ce que** chaque lumière d'isolation (17) a une section frontale dépourvue d'angle vif.

2. Matériau selon la revendication 1, **caractérisé en ce que** la nappe ajourée (10) comprend au moins une zone (24), dite zone résistive, de plus grande résistance thermique, dans laquelle sont ménagées des lumières d'isolation (17) définissant une aire totale d'ouverture supérieure à la moitié de l'aire de la zone résistive, l'ensemble desdites zones résistives s'étendant sur plus de la moitié de l'aire de la nappe ajourée.

3. Matériau selon l'une des revendications 1 ou 2, **caractérisée en ce que** la nappe ajourée est en un matériau fibreux non tissé, thermolié et/ou aiguilleté et/ou collé.

4. Matériau selon l'une des revendications 1 à 3, **caractérisé en ce que** la nappe ajourée présente des lumières d'isolation (17) de section circulaire.

5. Matériau selon l'une des revendications 1 à 4, **caractérisé en ce que** la nappe ajourée présente des lumières d'isolation de section ovale ou elliptique.

6. Matériau selon l'une des revendications 1 à 5, **caractérisé en ce que** les dimensions de chaque lumière d'isolation (17), l'épaisseur de la nappe ajourée (10) et la souplesse de chaque film (9, 11) qui la couvre sont adaptées pour éviter tout contact intempestif, à travers ladite lumière, entre le film réfléchissant (9) et un film (11) ou une paroi en regard de l'autre côté de la nappe ajourée.

7. Matériau selon l'une des revendications 1 à 6, **caractérisé en ce que** chaque lumière d'isolation (17) présente une dimension maximale inférieure à dix fois l'épaisseur de la nappe ajourée (10).

8. Matériau selon l'une des revendications 1 à 7, **caractérisé en ce que** la nappe ajourée (10) présente une épaisseur comprise entre 1 mm et 12 mm, et **en ce que** chaque lumière d'isolation présente une dimension maximale comprise entre 10 mm et 30 mm.

9. Matériau selon l'une des revendications 2 à 8, **caractérisé en ce que** les lumières d'isolation d'une zone résistive sont alignées dans une direction longitudinale et dans une direction transversale du matériau.

10. Matériau selon l'une des revendications 2 à 8, **caractérisé en ce que** les lumières d'isolation (17) d'une zone résistive (24) sont disposées en quinconce.

11. Matériau selon l'une des revendications 2 à 10, **caractérisé en ce que** la ou les zones résistives forment une des bandes longitudinales ou transversales dans la nappe ajourée.

12. Matériau selon l'une des revendications 1 à 11, **caractérisé en ce qu'**il présente une épaisseur totale inférieure à 10 cm.

13. Matériau selon l'une des revendications 1 à 12, **caractérisé en ce que** chaque nappe ajourée (2, 4, 6, 8, 10) est couverte de chaque côté par un film souple réfléchissant (1, 3 , 5, 7 , 9, 11).

14. Matériau selon l'une des revendications 1 à 13, **caractérisé en ce que** chaque nappe ajourée (2, 4, 6, 8, 10) est une ouate ou un feutre ou un molleton en un matériau fibreux non tissé réalisé à partir d'une matière choisie parmi les matières synthétiques en polyester, polyamide, chlorofibres, polyoléfine, les matières artificielles telles que rayonne viscose, les matières naturelles végétales telles que coton, chanvre, lin, les matières naturelles animales telles que laine de mouton, les mélanges de plusieurs des matières précitées.

15. Matériau selon l'une des revendications 1 à 14, **caractérisé en ce qu'**il comprend un film (1), dit film de couverture, présentant une face externe (12) formant une face frontale du matériau, et **en ce que** ledit film de couverture (1) est étanche à l'eau et perméable à la vapeur d'eau, et présente une résistance à la rupture supérieure à 150 N.

16. Matériau selon la revendication 15, **caractérisé en ce que** le film de couverture est un non-tissé réalisé dans une matière choisie parmi les polypropylènes, les polyesters, la rayonne viscose, les mélanges de plusieurs des matières précitées, et **en ce que** sa face externe (12) est gaufrée et/ou calandrée et/ou apprêtée, et est recouverte d'un revêtement métallique réfléchissant.

17. Matériau selon l'une des revendications 1 à 16, **caractérisé en ce qu'**il est formé de couches (1, 3, 5, 7, 9, 11; 2, 4, 6, 8, 10) fixées entre elles par soudure ou par collage en un nombre restreint de points (25, 26), dit points de liaison, isolés et répartis sur l'aire du matériau.

18. Matériau selon la revendication 17, **caractérisé en ce que** les points de liaison (25, 26) sont situés en dehors des zones résistives (24) de chaque nappe ajourée.

19. Matériau selon l'une des revendications 1 à 18, se présentant sous la forme de panneaux, **caractérisé en ce qu'**il est formé de couches (1, 3, 5, 7, 9, 11 ; 2, 4, 6, 8, 10) qui, à l'exception d'un film (1) dit film de couverture, présentent des dimensions sensiblement identiques dans des plans frontaux et forment une épaisseur isolante multicomposant (35), et **en ce que** le film de couverture (1) s'étend en saillie de l'épaisseur isolante (35) le long d'au moins une portion nominale du contour périphérique de ladite épaisseur isolante, de façon à former au moins une bande (20) de recouvrement d'un panneau adjacent.

20. Matériau en lé selon la revendication 19, **caractérisé en ce que** le film de couverture (1) s'étend en saillie de l'épaisseur isolante (35) le long d'un bord droit latéral longitudinal (21) de ladite épaisseur isolante, dit bord de recouvrement, de façon à former une bande (20) de recouvrement droite latérale longitudinale.

21. Matériau en dalle selon la revendication 20, **caractérisé en ce que** le film de couverture s'étend en saillie de l'épaisseur isolante le long de deux bords droits latéraux, dits bords de recouvrement, contigus ou opposés de ladite épaisseur isolante, de façon à former deux bandes de recouvrement droites latérales contiguës ou opposées.

## Claims

1. A supple thermal-insulation material comprising at least one supple batt (10) and at least one supple film (9), which are superposed, comprising at least one supple batt (10), a so-called perforated batt, that is
• covered on one side at least by a supple film (9), a so-called reflective film, exhibiting a face that is, at the same time, reflective and hardly emissive, and/or two hardly emissive faces, and/or two reflective faces,
• and provided with at least one through-hole (17), a so-called insulation hole, containing a volume of gas which normally comes into contact with each portion of film opposite the insulation hole, **characterised in that** each insulation hole (17) has a frontal cross-section devoid of sharp corners.

2. Material according to Claim 1, **characterised in that** the perforated batt (10) comprises at least one zone (24), a so-called resistive zone, of greater thermal resistance, in which there are arranged insulation holes (17) defining a total area of opening greater than half of the area of the resistive zone, the totality of said resistive zones extending over more than half of the area of the perforated batt.

3. Material according to one of Claims 1 or 2, **characterised in that** the perforated batt is made of a non-woven, thermobonded and/or needled and/or adhesion-bonded fibrous material.

4. Material according to one of Claims 1 to 3, **characterised in that** the perforated batt exhibits insulation holes (17) of circular cross-section.

5. Material according to one of Claims 1 to 4, **characterised in that** the perforated batt exhibits insulation holes of oval or elliptical cross-section.

6. Material according to one of Claims 1 to 5, **characterised in that** the dimensions of each insulation hole (17), the thickness of the perforated batt (10) and the suppleness of each film (9, 11) that covers it are adapted so as to avoid any untimely contact, across said hole, between the reflective film (9) and a film (11) or a partition wall opposite the other side of the perforated batt.

7. Material according to one of Claims 1 to 6, **characterised in that** each insulation hole (17) exhibits a maximal dimension less than ten times the thickness of the perforated batt (10).

8. Material according to one of Claims 1 to 7, **characterised in that** the perforated batt (10) exhibits a thickness between 1 mm and 12 mm, and **in that** each insulation hole exhibits a maximal dimension between 10 mm and 30 mm.

9. Material according to one of Claims 2 to 8, **characterised in that** the insulation holes of a resistive zone are aligned in a longitudinal direction and in a transverse direction of the material.

10. Material according to one of Claims 2 to 8, **characterised in that** the insulation holes (17) of a resistive zone (24) are arranged in staggered manner.

11. Material according to one of Claims 2 to 10, **characterised in that** the resistive zone or zones form one or more longitudinal or transverse bands in the perforated batt.

12. Material according to one of Claims 1 to 11, **characterised in that** it exhibits a total thickness of less than 10 cm.

13. Material according to one of Claims 1 to 12, **characterised in that** each perforated batt (2, 4, 6, 8, 10) is covered on each side by a reflective supple film (1, 3, 5, 7, 9, 11).

14. Material according to one of Claims 1 to 13, **characterised in that** each perforated batt (2, 4, 6, 8, 10) is a wadding or a felt or a flannelette consisting of a non-woven fibrous material that is produced from a material chosen from among the synthetic materials made of polyester, polyamide, chlorofibres, polyolefin, the artificial materials such as viscose rayon, the natural materials of vegetable origin, such as cotton, hemp, flax, the natural materials of animal origin, such as sheep's wool, mixtures of several of the aforementioned materials.

15. Material according to one of Claims 1 to 14, **characterised in that** it comprises a film (1), a so-called covering film, exhibiting an external face (12) forming a front face of the material, and **in that** said covering film (1) is impervious to water and permeable to water vapour, and exhibits a rupture strength greater than 150 N.

16. Material according to Claim 15, **characterised in that** the covering film is a nonwoven produced from a material chosen from among the polypropylenes, the polyesters, viscose rayon, mixtures of several of the aforementioned materials, and **in that** its external face (12) is embossed and/or calendered and/or finished and is covered by a reflective metallic facing.

17. Material according to one of Claims 1 to 16, **characterised in that** it is formed from layers (1, 3, 5, 7, 9, 11; 2, 4, 6, 8, 10) which are fixed to one another by soldering or by adhesion bonding at a restricted number of points (25, 26), so-called coupling-points, which are isolated and distributed over the area of the material.

18. Material according to Claim 17, **characterised in that** the coupling-points (25, 26) are situated outside the resistive zones (24) of each perforated batt.

19. Material according to one of Claims 1 to 18, taking the form of panels, **characterised in that** it is formed from layers (1, 3, 5, 7, 9, 11; 2, 4, 6, 8, 10) which, with the exception of a film (1), a so-called covering film, exhibit approximately identical dimensions in frontal planes and form a multi-component insulating thickness (35) and **in that** the covering film (1) projects from the insulating thickness (35) along at least one nominal portion of the peripheral contour of said insulating thickness in such a manner as to form at least one overlapping band (20) of an adjacent panel.

20. Material in strip-form according to Claim 19, **characterised in that** the covering film (1) projects from the insulating thickness (35) along a longitudinal lateral straight edge (21) of said insulating thickness, a so-called overlapping edge, in such a manner as to form a longitudinal lateral straight overlapping band (20).

21. Material in slab-form according to Claim 20, **characterised in that** the covering film projects from the insulating thickness along two lateral straight edges, so-called overlapping edges, which are contiguous with or opposite said insulating thickness, in such a way as to form two contiguous or opposite lateral straight overlapping bands.

## Patentansprüche

1. Wärmedämmendes weiches Material mit mindestens einer weichen Matte (10) und mindestens einer darauf liegenden weichen Folie (9), das mindestens eine weiche Matte (1) umfaßt, nämlich die sogenannte durchlochte Matte,
. die auf mindestens einer Seite mit einer weichen Folie (9) überzogen ist, der sogenannten reflektierenden Folie, die eine gleichzeitig reflektierende und gering emittierende Seite und/oder zwei wenig emittierende Seiten, und/oder zwei reflektierende Seiten aufweist,
. und die mit mindestens einer durchgehenden Öffnung (17) versehen ist, der sogenannten Isolierungsöffnung, die ein Gasvolumen enthält, das normalerweise in Berührung mit jedem Abschnitt der Folie gegenüber der Isolierungsöffnung in Berührung kommt, **dadurch gekennzeichnet, daß** jede Isolierungsöffnung (17) einen frontalen Abschnitt ohne scharfen Winkel hat.

2. Material nach Anspruch 1, **dadurch gekennzeichnet, daß** die durchlochte Matte (10) mindestens eine Zone (24) umfaßt, die sogenannte resistive Zone (24) mit größerer Temperaturstabilität, in der Isolierungsöffnungen (17) gestaltet sind, die einen Öffnungsbereich von insgesamt über der Hälfte des Bereichs der resistiven Zone definiert, wobei sich die besagten resistiven Zonen insgesamt auf über die Hälfte des Bereichs der durchlochten Matte erstrecken.

3. Material nach einem beliebigen der vorstehenden Ansprüche 1 oder 2, **dadurch gekennzeichnet, daß** die durchlochte Matte aus einem wärmeverbundenen und/oder genadelten und/oder geklebten Faservliesmaterial besteht.

4. Material nach einem beliebigen der vorstehenden Ansprüche 1 bis 3, **dadurch gekennzeichnet, daß** die durchlochte Matte Isolierungsöffnungen (17) mit kreisförmigem Querschnitt aufweisen.

5. Material nach einem beliebigen der vorstehenden Ansprüche 1 bis 4, **dadurch gekennzeichnet, daß** die durchlochte Matte Isolierungsöffnungen mit ovalem oder elliptischem Querschnitt aufweisen.

6. Material nach einem beliebigen der vorstehenden Ansprüche 1 bis 5, **dadurch gekennzeichnet, daß** die Abmessungen jeder Isolierungsöffnung (17), die Dicke der durchlochten Matte (10) und die Weichheit der sie abdeckenden beiden Folien (9, 11) geeignet sind, um jeglichen plötzlichen Kontakt durch die besagte Öffnung hindurch zwischen der reflektierenden Folie (9) und einer Folie (11) oder einer Wand gegenüber der anderen Seite der durchlochten Matte zu verhindern.

7. Material nach einem beliebigen der vorstehenden Ansprüche 1 bis 6, **dadurch gekennzeichnet, daß** jede Isolierungsöffnung (17) eine maximale Abmessung von unter dem Zehnfachen der Dicke der durchlochten Matte (10) aufweist.

8. Material nach einem beliebigen der vorstehenden Ansprüche 1 bis 7, **dadurch gekennzeichnet, daß** die durchlochte Matte (10) eine Dicke von zwischen 1 mm und 12 mm aufweist, und daß jede Isolierungsöffnung eine maximale Abmessung von zwischen 10 mm und 30 mm aufweist.

9. Material nach einem beliebigen der vorstehenden Ansprüche 2 bis 8, **dadurch gekennzeichnet, daß** die Isolierungsöffnungen einer resistiven Zone in einer Längsrichtung und in einer Querrichtung des Materials ausgerichtet sind.

10. Material nach einem beliebigen der vorstehenden Ansprüche 2 bis 8, **dadurch gekennzeichnet, daß** die Isolierungsöffnungen (17) einer resistiven Zone (24) überkreuz angeordnet sind.

11. Material nach einem beliebigen der vorstehenden Ansprüche 2 bis 10, **dadurch gekennzeichnet, daß** die resistive(n) Zone(n) einen oder mehrere Längs- oder Querstreifen in der durchlochten Matte bilden.

12. Material nach einem beliebigen der vorstehenden Ansprüche 1 bis 11, **dadurch gekennzeichnet, daß** es eine Dicke von insgesamt unter 10 cm aufweist.

13. Material nach einem beliebigen der vorstehenden Ansprüche 1 bis 12, **dadurch gekennzeichnet, daß** jede durchlochte Matte (2, 4, 6, 8, 10) auf jeder Seite von einer reflektierenden weichen Folie (1, 3, 5, 7, 9, 11) abgedeckt wird.

14. Material nach einem beliebigen der vorstehenden Ansprüche 1 bis 13, **dadurch gekennzeichnet, daß** jede durchlochte Matte (2, 4, 6, 8, 10) eine Watte oder ein Filz oder ein Molton aus einem Faservlies ist, das aus einem Stoff ausgeführt wurde, der unter den Synthetikmaterialen aus Polyester, Polyamid, Chlorofasern, Polyolefinen, aus künstlichen Stoffen wie Rayon, Viskose, natürlichen Stoffen pflanzlicher Herkunft wie Baumwolle, Hanf, Leinen, natürlichen Stoffen tierischer Herkunft wie Schafwolle, Mischungen aus mehreren der vorgenannten Stoffe gewählt wurde.

15. Material nach einem beliebigen der vorstehenden Ansprüche 1 bis 14, **dadurch gekennzeichnet, daß** es eine Folie (1), eine sogenannte Abdeckfolie umfaßt, die eine Außenseite (12) aufweist, die eine frontale Seite des Materials bildet, und **dadurch**, daß die besagte Abdeckfolie (1) wasserdicht und wasserdampfdurchlässig ist und eine Reißfestigkeit von über 150 N aufweist.

16. Material nach Anspruch 15, **dadurch gekennzeichnet, daß** die Abdeckfolie ein Vlies aus einem Material ist, das unter den Polypropylenen, Polyestern, Viskoserayonne, den Mischungen aus mehreren der vorgenannten Stoffe gewählt wurde, und **dadurch**, daß sie an ihrer Außenseite (12) mustergewalzt und/oder kalandriert und/oder appretiert ist und von einer reflektierenden Metallverkleidung abgedeckt ist.

17. Material nach einem beliebigen der vorstehenden Ansprüche 1 bis 16, **dadurch gekennzeichnet, daß** es aus Schichten (1, 3, 5, 7, 9, 11; 2, 4, 6, 8, 10) gebildet wird, die durch Schweißen oder durch Kleben an einer begrenzten Anzahl von Punkten (25, 26), den sogenannten Verbindungspunkten, untereinander befestigt sind, die getrennt und auf dem Bereich des Materials verteilt sind.

18. Material nach Anspruch 17, **dadurch gekennzeichnet, daß** die Verbindungspunkte (25, 26) sich außerhalb der resistiven Zonen (24) jeder durchlochte Matte befinden.

19. Material nach einem beliebigen der vorstehenden Ansprüche 1 bis 18, das die Form von Platten aufweist, **dadurch gekennzeichnet, daß** es aus Schichten (1, 3, 5, 7, 9, 11; 2, 4, 6, 8, 10) gebildet wird, die unter Ausnahme einer Folie (1), der sogenannten Abdeckfolie, deutlich identische Abmessungen in den frontalen Ebenen aufweisen und eine isolierende Multikomponentendicke (35) bilden, und **dadurch**, daß die Abdeckfolie (1) sich im Vorsprung von der Isolierdicke (35) entlang mindestens einem Nennabschnitt des peripheren Rands der besagten Isolierdicke erstreckt, so daß mindestens ein Streifen (20) zur Abdeckung einer anschließenden Platte gebildet wird.

20. Materialbahn nach Anspruch 19, **dadurch gekennzeichnet, daß** die Abdeckfolie (1) sich im Vorsprung der Isolierdicke (35) entlang einer geraden seitlichen Längskante (21) der besagten Isolierdicke erstreckt, der besagten Abdeckkante, so daß ein gerader, seitlicher längsverlaufender Abdeckstreifen (20) gebildet wird.

21. Materialplatte nach Anspruch 20, **dadurch gekennzeichnet, daß** sich die Abdeckfolie im Vorsprung von der Isolierdicke an zwei geraden seitlichen Kanten entlang erstreckt, den sogenannten Abdeckkanten, die an die besagte Isolierdicke anschließen oder entgegengesetzt verlaufen, so daß zwei gerade, seitliche anschließende oder entgegengesetzte Abdeckstreifen gebildet werden.
